# EUROPEAN PATENT APPLICATION

(11) **EP 4 428 013 A1**
(43) Date of publication of application: **11.09.2024**
(21) Application number: 24162704.1
(22) Date of filing: 11.03.2024
(51) Int. Cl.: B62D 25/20, B62D 25/24, B62D 33/06

(54) **FOOTWELL DEBRIS REMOVAL APPARATUS AND METHOD**

(30) Priority: 10.03.2023 US 202363489720 P
(71) Applicant: Manitou Equipment America, LLC, West Bend, WI 53095 (US)
(72) Inventor: PROKOPOWICZ, Alexander R., West Bend, WI, 53095 (US); SCHULTZ, Kevin A., Hartford, WI, 53027 (US); ALLCOX, Cade J., Cedarburg, WI, 53012 (US)
(74) Representative: Loyer & Abello

(57) **Abstract**

A vehicle including a floor surface, a chute, and a bottom surface. The floor surface is at least partially sloped relative to a ground surface. The floor surface defines an upper opening. The chute is in fluid communication with the upper opening. A lower opening in the bottom surface is in fluid communication with the chute.

## Description

### CROSS-REFERENCE TO RELATED APPLICATION

This application claims priority to U.S. Provisional Patent Application No. 63/489,720 filed March 10, 2023, the entire disclosure of which is incorporated herein by reference.

### BACKGROUND

Utility vehicles, such as loaders, telehandlers, forklifts, and the like, are useful in a variety of outdoor environments. As a result of their use in outdoor environments, dirt, sand, gravel, and other debris often settle in the footwell of the vehicle. This debris makes the interior of the vehicle unsightly. In a large enough volume, it can cause functional issues by blocking full movement of the vehicle's pedals and making entry and exit from the operator cab difficult.

Accordingly, some utility vehicles include systems and methods to help clean out the footwell. Conventional methods can sometimes be cumbersome and inefficient. These methods include manually scooping debris out of the footwell, removing footwell mats for cleaning, or actuating footwell features that swing out of the cab in order to clean out hard-to-reach areas. In some forms, holes are provided in the floor of the footwell, but these can lead to debris becoming further trapped inside the vehicle body. The inefficiency of current systems and the difficulty of using these systems can lead to less frequent cleanings and more debris build up in the footwell. As such, it would be useful to provide an improved design that allows for efficient and easy footwell cleaning to prevent the buildup of debris and the problems associated with this buildup.

### SUMMARY

Some embodiments provide a utility vehicle including a vehicle body and an operator cab. The operator cab has a footwell that includes a floor surface with an upper opening in said floor surface. The utility vehicle also includes a chute having a top end and a bottom end, the chute being aligned below the upper opening. The floor surface is angled at least partially toward the upper opening, and the bottom end of the chute extends to a lower opening in a bottom surface of the vehicle body. The vehicle floor can have raised portions that define at least one raised surface plane, and the raised surface plane can be nonparallel to the floor surface. The vehicle can include a selectively removable plug corresponding to the upper opening. The vehicle can include a selectively removable cover plate corresponding to the lower opening. A space can be provided between the top end of the chute and the upper opening in the floor surface. The upper opening can be located adjacent an operator seat platform of the vehicle and laterally toward one of a left side or a right side of the vehicle. The chute can include a plurality of walls, and at least one of the plurality of walls can be adjacent a fuel tank of the vehicle. The upper opening can include a locking mechanism to selectively couple the plug to the upper opening.

Some embodiments provide a method for cleaning a footwell of a vehicle cab including providing a work vehicle, removing a plug from an upper opening, supplying water into the footwell to move debris into the upper opening, removing a selectively removable cover plate from the lower opening, and coupling the plug to the upper opening. Optionally, the method can include the step of unlocking a locking mechanism on the plug to remove the plug from the upper opening.

Some embodiments provide a vehicle including a vehicle body, an operator cab, an upper opening, and a chute. The operator cab has a footwell. The footwell includes a floor surface. The upper opening is defined in the floor surface. The chute has a top end and a bottom end. The chute is aligned below the upper opening. At least a portion of the floor surface ramps upwardly relative to the upper opening. The bottom end of the chute extends to a lower opening in a bottom surface of the vehicle body.

In some embodiments, the footwell has raised portions that define at least one raised surface plane, and the raised surface plane is nonparallel to the floor surface. Some embodiments further include a selectively removable plug corresponding to the upper opening. In some embodiments, the upper opening includes a locking mechanism to selectively couple the plug to the upper opening. In some embodiments, the plug forms a fluid tight seal with the floor surface. In some embodiments, the plug includes a handle. Some embodiments further include a selectively removable cover plate corresponding to the lower opening. In some embodiments, the cover plate permits liquids to escape the chute. In some embodiments, a space is provided between the top end of the chute and the upper opening in the floor surface. In some embodiments, the upper opening is located adjacent an operator seat platform of the vehicle and laterally toward one of a left side or a right side of the vehicle. In some embodiments, the chute includes a plurality of walls, and at least one of the plurality of walls is adjacent a fuel tank of the vehicle. In some embodiments, the fuel tank defines a cut-out to accommodate the chute. In some embodiments, the chute is provided in the form of a U-channel coupled to a side panel of the operator cab. In some embodiments, the floor surface includes a front section and a rear section, the front section ramping upwardly from the rear section. In some embodiments, the rear section is substantially parallel to a level ground surface when the vehicle is resting on the level ground surface.

Some embodiments provide a method for cleaning a footwell of a work vehicle including removing a plug from an upper opening defined in a floor surface of the footwell; supplying liquid into the footwell to move debris into the upper opening; removing a selectively removable cover plate from a lower opening of the work vehicle; and coupling the plug to the upper opening.

In some embodiments, the liquid is water. Some embodiments further include unlocking a locking mechanism on the plug to remove the plug from the upper opening.

Some embodiments provide a vehicle including a floor surface, a chute, and a bottom surface. The floor surface is at least partially sloped relative to a level ground surface when the vehicle is resting on the level ground surface. The floor surface defines an upper opening. The chute is in fluid communication with the upper opening. The bottom surface has a lower opening in fluid communication with the chute.

Some embodiments further include a cover plate selectively removably engaged with the chute, where the cover plate and the chute form a liquid-permeable seal.

### BRIEF DESCRIPTION OF THE DRAWINGS

The accompanying drawings, which are incorporated in and form a part of this disclosure, illustrate embodiments of the invention and, together with the description, serve to explain the principles of embodiments of the invention:
FIG. 1 is a front isometric view of a utility vehicle according to an embodiment;
FIG. 2 is a partial isometric cross-sectional view of the utility vehicle of FIG. 1 taken along line X-X with selected components rendered transparently for clarity;
FIG. 3 is a partial isometric cross-sectional view of the utility vehicle of FIG. 1 taken along line Y-Y with selected components rendered transparently for clarity;
FIG. 4 is a partial bottom view of the utility vehicle of FIG. 1 with a bottom surface of the utility vehicle removed for clarity; and
FIG. 5 is a partial bottom isometric view of the utility vehicle of FIG. 1 with a bottom surface of the utility vehicle removed for clarity.

### DETAILED DESCRIPTION

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Accordingly, it is to be understood that the invention is not limited in its application to the details of construction and the arrangement of components set forth in the following description or illustrated in the attached drawings. Thus, embodiments of the invention are not intended to be limited to the embodiments shown but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize that the examples provided herein have many useful alternatives and fall within the scope of embodiments of the invention.

As used herein, unless otherwise specified or limited, the terms "mounted," "connected," "supported," and "coupled" and variations thereof are used broadly and encompass both direct and indirect mountings, connections, supports, and couplings. Further, unless otherwise specified or limited, "connected" and "coupled" are not restricted to physical or mechanical connections or couplings. Also, it is to be understood that the phraseology and terminology used herein are for the purpose of description and should not be regarded as limiting. For example, the use of "including," "comprising," or "having" and variations thereof herein is meant to encompass the items listed thereafter and equivalents thereof, as well as additional items.

As used herein, unless otherwise specified or limited, "at least one of A, B, and C," and similar other phrases, are meant to indicate A, or B, or C, or any combination of A, B, and/or C. As such, this phrase, and similar other phrases can include single or multiple instances of A, B, and/or C, and, in the case that any of A, B, and/or C indicates a category of elements, single or multiple instances of any of the elements of the categories A, B, and/or C.

As explained above, it would be useful to provide an improved utility vehicle footwell debris removal system and method. Because conventional footwell cleaning systems and methods can be cumbersome, operators have a tendency to let debris build up in the footwell of the vehicle, which can block full movement of the vehicle's pedals and make entry and exit from the operator cab difficult. Embodiments described herein are designed to make footwell cleaning simpler and easier for the operator as well as provide other benefits.

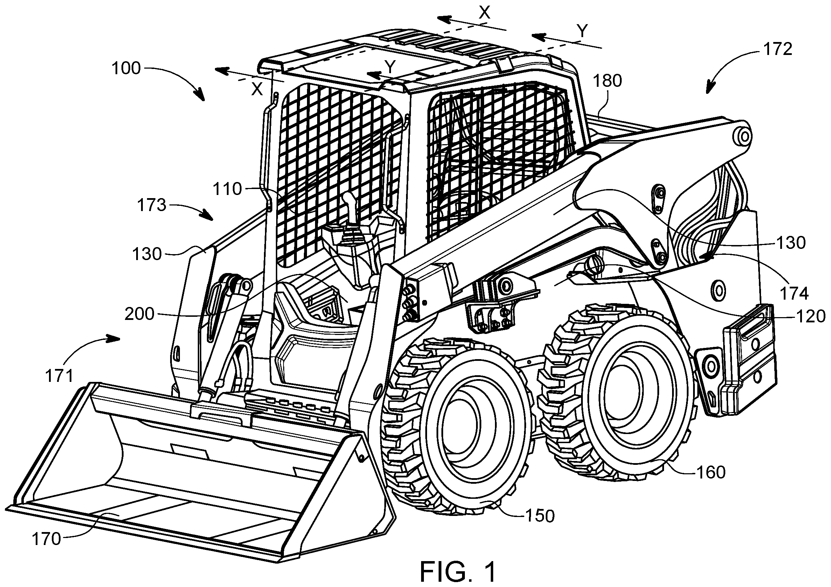

FIG. 1 illustrates a utility vehicle 100 with an operator cab 110 according to one embodiment. The utility vehicle 100 includes a vehicle body 120, a pair of lift arms 130, the operator cab 110, a pair of front wheels 150, a pair of rear wheels 160, a utility attachment 170, and an engine compartment 180. The vehicle body 120 has a front end 171, a rear end 172, and lateral sides 173, 174. The pair of lift arms 130 extend along the lateral sides 173, 174 of the vehicle body 120. In some forms, the lift arms 130 are coupled to the vehicle body 120 adjacent to the sides of the engine compartment 180. In some forms, the utility vehicle 100 includes only a single lift arm 130. The single lift arm 130 can be coupled to the vehicle body 120 in front of the operator cab 110 toward the front end 171 or behind the operator cab 110 toward the rear end 172. In some forms, the single lift arm 130 can be coupled to the vehicle body 120 adjacent to the operator cab 110 toward one of the lateral sides 173, 174. In some forms, the engine compartment 180 is located adjacent to, and in front of, (or partially in front of) the operator cab 110, or adjacent to, and behind (or partially behind) the operator cab 110.

The utility attachment 170 can be provided in the form of an auger, backhoe, bale mover, blade, boom lift, breaker, broom, bucket, chipper, concrete tool, grader blade, grappler, land leveler, log splitter, material unroller, mower, mulcher, pallet fork, rake, rock wheel, roto tiller, scarifier, scrapper, silage defacer, snow blower, snow push, sod unroller, spreader, stump grinder, stump remover, tree handler, trencher, and the like. It is further understood that although a front pair of wheels 150 and a rear pair of wheels 160 are illustrated with the utility vehicle 100, other mechanical forms of movement can be provided, such as via a set of tracks. Further, although an engine compartment 180 is described for utility vehicle 100, other forms of vehicle power can be provided. For example, the utility vehicle 100 can be battery powered or powered by another electrical means. Although the utility vehicle 100 is depicted in FIG. 1 as a compact loader, it is to be understood that the operator cab 110 can also be provided with numerous other utility vehicles such as telescopic handlers, vertical lifts, forklifts, or other construction, agricultural, or warehousing vehicles.

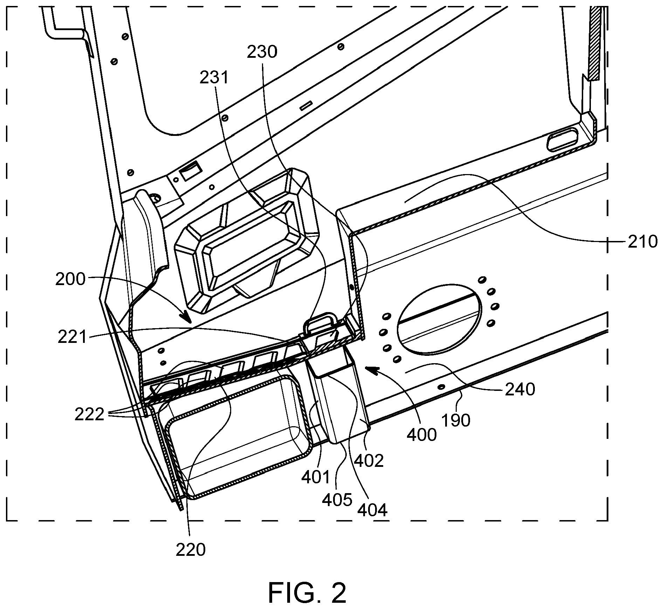

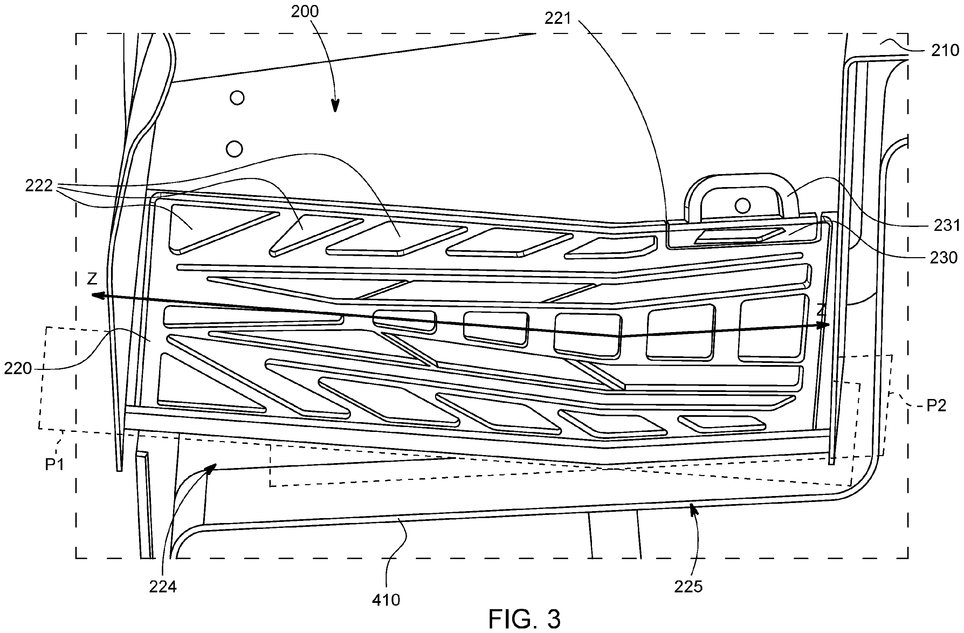

As shown in FIGS. 2 and 3, the operator cab 110 contains a footwell 200 and an operator seat platform 210 upon which an operator seat can be mounted. The footwell 200 includes a floor surface 220. The floor surface 220 includes an upper opening 221 and can also include a plurality of raised portions 222. The upper opening 221 extends through the floor surface 220. In the embodiment shown, the upper opening 221 is located adjacent to the operator seat platform 210 and on the right-most portion of the operator cab 110 toward the right lateral side 173. In other embodiments, the upper opening 221 can be located in other positions in the floor surface 220. For example, the upper opening 221 can be located at a position along a center axis Z-Z (see FIG. 3) of the operator cab 110 anywhere between the operator seat platform 210 and the front-most portion of the operator cab 110 near the front end 171. In some forms, the upper opening 221 is located along the left-most or right-most portions of the operator cab 110 anywhere between the operator seat platform 210 and the front-most portion of the operator cab 110. In some forms, the upper opening 221 is located at a position in between the center axis Z-Z and one of the left-most or right-most portions of the operator cab 110 anywhere between the operator seat platform 210 and the front-most portion of the operator cab 110. In some embodiments, there are multiple upper openings 221 in any of the locations previously listed.

As shown, a plug 230 is configured to cover the upper opening 221. The plug 230 can have a handle 231 extending outwards from the plug 230. In other embodiments, a strap, chain, or other apparatus for lifting the plug 230 can be used in place of the handle 231. The plug 230 is selectively removable in order to clean the footwell 200 of the vehicle 100 and is seated into the upper opening 221 during normal operation. In some embodiments, the upper opening 221 can include a locking mechanism that can selectively couple the plug 230 into the upper opening 221 to prevent the plug 230 from being inadvertently removed. The locking mechanism can be provided in the form of one or more latches, snap fit mechanisms with cantilever prongs, camming mechanisms, or push-to-release mechanisms. In some embodiments, the plug 230 includes an elastomeric seal or gasket extending around the outer circumference of the plug 230 that provides a fluid tight seal when the plug 230 is pushed into the upper opening 221.

Referring further to FIG. 3, in some embodiments, the floor surface 220 is at least partially slanted toward the rear end 172 of the vehicle 100. The floor surface 220 can comprise multiple sections that are positioned on and define a plurality of geometric planes. For example, a first section 224 of the floor surface 220, which is located closer to the front end 171 of the vehicle 100, can define a first plane *P1,* and a second section 225 of the floor surface 220, which is located adjacent the operator seat platform 210, can define a second plane *P2.* In the embodiment shown, the utility vehicle 100 is resting on a level surface, and the second plane *P2* is substantially parallel to the level surface. For the purposes of this disclosure, a level surface is a surface that is substantially perpendicular to the force of gravity. The first plane *P1,* in contrast, is slanted downward as it extends from the front end 171 of the vehicle 100 toward the rear end 172 of the vehicle 100.

In other embodiments, the first section 224 and the second section 225, as well as the corresponding first and second planes *P1* and *P2,* can be obliquely angled toward the upper opening 221 with respect to the level surface. In some embodiments, the oblique angle of the first section 224 and the first plane *P1* is different from the oblique angle of the second section 225 and the second plane *P2.* For example, the oblique angle of the first section 224 and the first plane *P1* can be greater than or less than the oblique angle of the second section 225 and the second plane *P2.* In another example, the first section 224 and the first plane *P1* can be obliquely angled toward the upper opening 221 about a different axis than the second section 225 and the second plane *P2* with respect to the level surface. In some embodiments, the floor surface 220 is at least partially sloped and at least partially positioned higher than the upper opening 221. Accordingly, the floor surface 220 can be at least partially sloped toward the upper opening 221 to help facilitate fluid flow to the upper opening 221. Thus, the floor surface 220 at least partially ramps upwardly relative to the upper opening 221. Consequently, the floor surface 220 at least partially funnels and/or directs debris and/or liquids downwardly toward the upper opening 221. In some forms, the entire floor surface 220 is positioned on and defines a single plane. In some forms, when the vehicle 100 is resting on a level surface, substantially the entire floor surface 220 is substantially parallel to the level surface.

Further, the raised portions 222 of the first section 224 can be configured to define a first raised surface plane (not shown), and the raised portions 222 of the second section 225 can be configured to define a second raised surface plane (not shown). In some forms, the first raised surface plane is parallel to the first section 224 of the floor surface 220 and the first plane *P1,* and the second raised surface plane is parallel to the second section 225 of the floor surface 220 and the second plane *P2.* It is understood that the first raised surface plane and the second raised surface plane can be provided in any of the relative spatial arrangements described above with respect to the first section 224 and the first plane *P1,* and the second section 225 and the second plane *P2.* In some embodiments, the first raised surface plane and/or the second raised surface plane are positioned at different angles than the first plane *P1* and/or the second plane *P2*, respectively. For example, in some embodiments, although the first section 224 and the first plane *P1* or the second section 225 and the second plane *P2* may be angled toward the upper opening 221, the first raised surface plane or the second raised surface plane may be substantially level or angled only in the fore-aft direction toward the front end 171 or the rear end 172 of the vehicle 100 and not obliquely angled. Accordingly, although the floor surface 220 may be at least partially obliquely angled toward the upper opening 221, an operator whose feet are resting on the raised portions 222 will experience the same floor angle under each foot and will not feel any oblique angling of the floor surface 220.

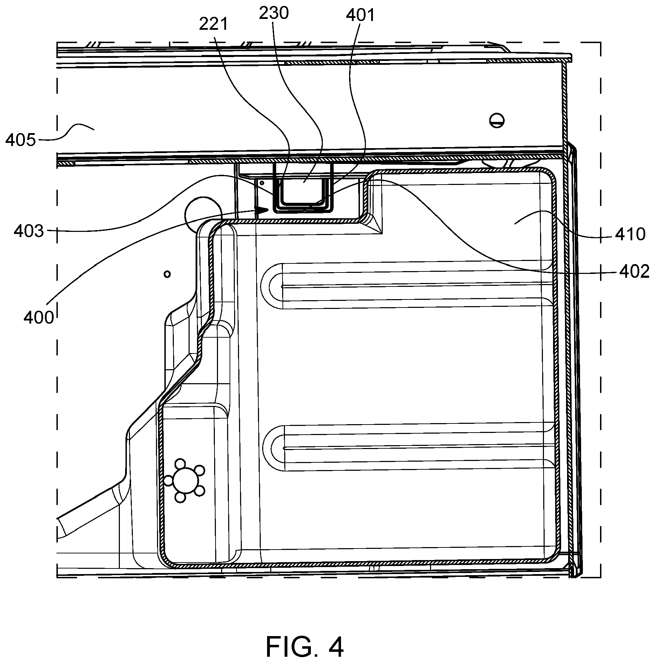

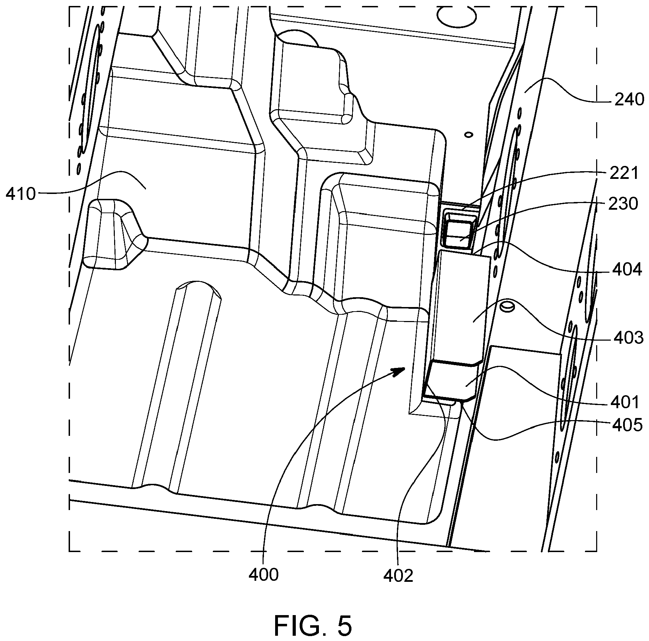

As shown in FIGS. 2, 4, and 5, the vehicle 100 includes a chute 400, a fuel tank 410, and a bottom surface 190 of the vehicle body 120 below the operator cab 110. The chute 400 is defined by a first wall 401, a second wall 402, and a third wall 403 that are positioned adjacent to a side panel 240 on one of the lateral side 173 or the lateral side 174 to form a hollow, rectangular tube. In some embodiments, the chute 400 can be provided in the form of a circular tube or another tube structure having more than three walls, or the chute 400 can be provided as two walls coupled to various other panels of the vehicle body 120. The chute 400 includes a top end 404 and a bottom end 405. In some embodiments, the chute 400 is provided in the form of a U-channel coupled to the side panel 240 of a vehicle frame, as shown in FIG. 2. The chute 400 can be welded, bolted, or attached to the side panel 240 using other methods known in the art.

The bottom surface 190 (see FIG. 2) is the lowest surface of the vehicle body 120. The bottom surface 190 contains a lower opening (not shown) that extends through the bottom surface 190. The lower opening can be located vertically beneath the upper opening 221 or offset horizontally from the upper opening 221. A fuel tank 410 is located under the floor surface 220 and above the bottom surface 190. The top end 404 of the chute 400 is aligned below the upper opening 221. In some forms, the chute 400 extends vertically downward to the lower opening in the bottom surface 190 of the vehicle body 120. In some embodiments, for example, when the lower opening is horizontally offset from the upper opening 221, the chute 400 can extend in both a downward direction toward the bottom surface 190 and a horizontal direction toward the front end 171, the rear end 172, or the lateral sides 173, 174 of the vehicle body 120 in order to direct debris toward the lower opening. The chute 400 can be positioned adjacent the fuel tank 410. The fuel tank 410 can be sized and shaped to accommodate the chute 400 so that the chute 400 can extend from the upper opening 221 to the lower opening. For example, the fuel tank 410 can be formed with a cut-out, void, or irregular shape to provide space for the chute 400 to extend from the floor surface 220 down to the bottom surface 190. Accordingly, in some embodiments, the chute 400 is surrounded by the fuel tank 410 on two or more sides. In the shown embodiment, the fuel tank 410 substantially encloses the first wall 401 and the second wall 402. As described above, the upper opening 221 can be located in a variety of positions in the floor surface 220. Accordingly, the fuel tank 410 can be sized and shaped to allow a pathway for the chute 400 from the floor surface 220 down to the bottom surface 190 in a variety of locations. For example, the fuel tank 410 may include a void in the center of the fuel tank 410, and/or other sections of the perimeter of the fuel tank 410 may be modified to provide room for the chute 400.

In the embodiment shown, the top end 404 of the chute 400 does not extend vertically upwards to abut the bottom of the floor surface 220. Rather, a space is provided between the top end 404 of the chute 400 and the upper opening 221 in the floor surface 220 to accommodate flexion of the vehicle 100 (shown in FIG. 1). In some embodiments, the chute 400 may be coupled to the bottom of the floor surface 220. In some embodiments, a selectively removable cover plate (not pictured) is coupled to the bottom of the vehicle body 120 or the bottom end 405 of the chute 400 to cover the lower opening. Optionally, the removable cover plate can be bolted in place or attached using another known method.

In some forms, when the cover plate is coupled to the vehicle body 120 or the bottom end 405 of the chute 400, the cover plate does not create a liquid tight seal over the lower opening. Accordingly, after a liquid flows down the chute 400, the liquid can flow out of the lower opening and past the cover plate. However, the cover plate can provide sufficient coverage of the lower opening in order to prevent debris from moving up the chute 400 during normal use of the vehicle 100. For example, when the cover plate is coupled to the vehicle body 120 or the bottom end 405 of the chute 400, a thin air gap can be provided in various locations between the cover plate and the chute 400. Alternatively, the cover plate can cover between 90-99% of the lower opening, which leaves a space for fluid to escape from the chute 400 while still shielding the chute 400 from debris that might otherwise intrude into the chute 400.

In use, the operator of the vehicle 100 can clean out the footwell 200 using the upper opening 221, the chute 400, and the lower opening. For example, if a locking mechanism is used to hold the plug 230 in place, the mechanism can be unlocked. The plug 230 can then be removed from the upper opening 221. The operator can use their hands, or another cleaning tool, to push debris such as mud or leaves toward and into the upper opening 221. In some forms, a liquid, such as water, can be supplied into the footwell 200. For example, water can be sprayed into the footwell 200 to push debris toward the upper opening 221. The angle of the floor surface 220 and/or the raised portions 222 can help to move water and debris toward the upper opening 221. Accordingly, debris pushed into the upper opening 221 can fall down through the chute 400 and completely out of the vehicle 100 past the bottom surface 190. If the removable cover plate is attached over the lower opening, the lower cover plate may also be removed in order to allow any debris trapped inside of the chute 400 to exit the vehicle 100. Because the cover plate does not provide a fluid tight seal with the lower opening, liquefied debris, such as mud or dirt diluted by water sprayed into the footwell 200, can exit the chute 400 without the cover plate being removed. After the footwell 200 has been cleared of debris, the plug 230 can be placed back into the upper opening 221, and the removable cover plate can be secured back in place.

In other embodiments, other configurations are possible. For example, those of skill in the art will recognize, according to the principles and concepts disclosed herein, that various combinations, sub-combinations, and substitutions of the components discussed above can provide an appropriate system to remove debris from the footwell of a utility vehicle.

## Claims

1. A vehicle comprising:
a vehicle body;
an operator cab having a footwell, the footwell including a floor surface;
an upper opening defined in the floor surface; and
a chute having a top end and a bottom end, the chute aligned below the upper opening;
wherein at least a portion of the floor surface ramps upwardly relative to the upper opening and the bottom end of the chute extends to a lower opening in a bottom surface of the vehicle body.

2. The vehicle of claim 1, wherein the footwell has raised portions that define at least one raised surface plane, and the raised surface plane is nonparallel to the floor surface.

3. The vehicle of claim 1, further comprising a selectively removable plug corresponding to the upper opening.

4. The vehicle of claim 3 wherein the upper opening includes a locking mechanism to selectively couple the plug to the upper opening.

5. The vehicle of claim 3, wherein the plug forms a fluid tight seal with the floor surface.

6. The vehicle of claim 3, wherein the plug includes a handle.

7. The vehicle of claim 1, further comprising a selectively removable cover plate corresponding to the lower opening.

8. The vehicle of claim 7, wherein the cover plate permits liquids to escape the chute.

9. The vehicle of claim 1, wherein a space is provided between the top end of the chute and the upper opening in the floor surface.

10. The vehicle of claim 1, wherein the upper opening is located adjacent an operator seat platform of the vehicle and laterally toward one of a left side or a right side of the vehicle.

11. The vehicle of claim 1, wherein the chute includes a plurality of walls, and at least one of the plurality of walls is adjacent a fuel tank of the vehicle.

12. The vehicle of claim 11, wherein the fuel tank defines a cut-out to accommodate the chute.

13. The vehicle of claim 1 wherein the chute is provided in the form of a U-channel coupled to a side panel of the operator cab.

14. The vehicle of claim 1, wherein the floor surface includes a front section and a rear section, the front section ramping upwardly from the rear section.

15. The vehicle of claim 14, wherein the rear section is substantially parallel to a level ground surface when the vehicle is resting on the level ground surface.
